# EUROPEAN PATENT APPLICATION

(11) **EP 1 449 767 A1**
(43) Date of publication of application: **25.08.2004**
(21) Application number: 04075733.8
(22) Date of filing: 16.02.2001
(51) Int. Cl.: B65B 1/46, B65B 57/10, B65B 69/00, G01G 17/00

(54) **System and method for check-weighing the content of a blister**

(30) Priority: 18.02.2000 US 183465 P
(62) Divisional of application: 01914402.1
(71) Applicant: GLAXO GROUP LIMITED, Greenford, Middlesex UB6 ONN (GB)
(72) Inventor: Buckner III, Charles Amick Glaxo Wellcome Inc., Research Triangle Park NC 27709 (US); Moody, David Brian Glaxo Wellcome Inc., Research Triangle Park NC 27709 (US); Strong, Micheal Richard Glaxo Wellcome Inc., Research Triangle Park NC 27709 (US); Wilson, Thomas Scott Glaxo Wellcome Inc., Research Triangle Park NC 27709 (US); Bynum, Milton David, Lake Villa IL 60046 (US)
(74) Representative: Rice, Jason Neale

(57) **Abstract**

A system for check-weighing a metered dose powder inhaler blister comprises a guide (12) adapted to receive a blister strip (14) comprised of at least one blister; a punch (20) aligned with the guide for receiving the at least one blister; an actuator (26) engaged with the punch (20) for driving the punch toward the blister strip (14), whereby the blister is punched from the blister strip; and a balance (32) adapted to receive the punched blister for weighing the punched blister and generating a punched blister weight for the at least one blister.

## Description

### Technical Field

This invention relates generally to blister strips used to deliver powdered medication, and more particularly to a system and method for accurately measuring the content contained in the blisters comprising a blister strip.

### Background Art

Powdered medication for use with Multi Dose Powder Inhalers (MDP) is provided in blister strips comprised of one or more rows of blisters (indents made in an aluminum foil strip wherein each blister is filled with a metered amount of medication and the powder sealed within the blister by a composite lid foil).

A device is provided for the user that removes the lid foil, thus releasing the powder for use, so that the user can inhale the powdered medication. A variety of ailments can be treated in this manner, particularly asthma. Also, recent developments in antibiotic medications have proven MDPI to be an effective method of introducing the medication into a user's system.

In any case, irrespective of the medical condition being treated, it is critical that each blister contain the correct metered dose of medication to ensure proper treatment of the ailment and protect the user from over-medication or under-medication.

Currently, to ensure that the correct metered dose is being dispensed in each blister, random strips from a production run are tested by weighing each strip, inserting a needle into the individual blisters one at a time, extracting the powder through suction and then re-weighing the strip. Not only is this method time consuming (a strip comprising 120 blisters can typically take up to one hour to test), but the method has within it inherent inaccuracies. For instance, if all the powder is not extracted from each blister, then the weight of the strip after the powder has supposedly been removed will be inaccurate. Moreover, because it is understood and accepted that powder residue is left behind within the blister, a percentage of residual powder is assumed and an additional weight based on that assumed percentage is automatically subtracted from the weight of the empty strip.

Accordingly, because it is essential that the powder medication be dispensed in the correct metered dose, it is essential that the powder contained in each blister be accurately measured to ensure proper dosage.

### Summary of the Invention

This invention results from the realization that a truly effective system and method for accurately measuring a dose of powdered medication contained in a blister for use in a metered dose powder inhaler can be achieved in which the powder filled blister is punched from a blister strip without breaking the blister, to prevent loss of powder weight, and the punched blister is weighed. A predetermined weight, representing the weight of an empty blister, is subtracted from the weight of the punched blister to determine the weight of the powder dose contained in the punched blister.

The invention results from the further realization that the correct size of a blister can be verified by measuring the maximum height of the blister and comparing it to a predetermined height to determine whether the blister is the correct size for receiving, and thus dispensing, a predetermined dose of medication.

The invention results still further from the realization that a blister can be accurately punched without breaking the blister. This is accomplished by monitoring the profile of the blister whereby the center of the blister is determined. The blister is advanced a predetermined distance based on the blister's center to the punch such that the blister is accurately aligned beneath the punch. The foil strip or blister strip is then punched from the strip without breaking the blister.

This invention features a system for check-weighing a metered dose powder inhaler blister. The system comprises a guide adapted to receive a blister strip having at least one blister, a punch aligned with the guide for receiving the at least one blister, and an actuator engaging the punch for driving the punch toward the blister strip whereby the blister is punched from the blister strip. A balance adapted to receive the punched blister is provided for weighing the punched blister and generating a punched blister weight for the at least one blister.

In one embodiment of the present invention there can be a computer controller, responsive to the balance, for subtracting a predetermined weight from the punched blister weight. A drive assembly can be included, responsive to the blister strip, for advancing the at least one blister toward the punch. The drive assembly can include a drive wheel adapted to engage a first side of the blister strip for advancing the at least one blister toward the punch, and a friction wheel adapted to engage a second side of the blister strip opposite the first side for urging the blister strip toward the friction wheel to ensure the friction wheel properly engages the blister strip. The drive assembly can include a stepper motor responsive to the computer controller for engaging the drive wheel to advance the at least one blister a predetermined distance toward the punch.

A sensor can be provided, aligned with the guide and responsive to the at least one blister, for detecting the profile of the at least one blister. The sensor can include an energy source for directing a beam of energy toward the blister strip and a detector for receiving a beam of reflected energy from the blister strip. The energy source can include a light source, which can be a laser. The guide can include a spring for urging the blister strip into the guide to ensure the profile of the blister is accurately detected. The guide can further include a hole through which the beam of energy passes to prevent a beam of reflected energy from being detected in the absence of a blister strip within the guide. The punch can include a clamp such as a stripper plate, responsive to the actuator, for holding the blister strip within the guide as the blister is being punched from the blister strip to ensure a clean punch. The punch can also include a contoured tip for seating the blister within the punch as the blister is being punched from the blister strip to ensure that the blister is not broken when punched, the tip engaging the blister strip at an oblique angle. The actuator can include a fluid driven actuator which can be an air cylinder.

The invention also features a method for weighing the content of a blister in a blister strip. The method includes punching a blister containing a metered content from a blister strip, weighing the punched blister to determine a punched blister weight and subtracting from the punched blister weight a predetermined weight and representing the weight of an empty blister to determine a weight representative of the metered content.

In one embodiment the step of punching can include punching the blister from the blister strip without breaking the blister. The method can also include the steps of punching a blank from the blister strip and weighing the blank to produce the predetermined weight. The method can also include the step of measuring the height of the blister prior to punching the blister and detecting the center of the blister to facilitate alignment of the blister for punching. The step of detecting the center can include calculating first and second slopes of respective first and second blister sides to generate a blister profile and detecting the midpoint, or center, of the blister profile which represents the center of the blister.

The invention further features a method for detecting defects in a blister strip blister. The method includes directing a beam of energy from an energy source toward a blister strip containing at least one blister, moving the blister strip in alignment with the beam of energy such that the at least one blister passes through the beam of energy, and receiving beams of reflected energy from the blister strip. The maximum height of the at least one blister is determined from the reflected beams of energy and compared to a predetermined height.

The invention features still further a method for aligning a blister strip blister with a punch. The method includes directing a beam of energy from an energy source toward a blister strip containing at least one blister, moving the blister strip toward a punch in alignment with the beam of energy such that the at least one blister passes through the beam of energy. Reflected beams of energy from the blister strip are received and the center of the blister is detected. The blister is moved, in response to the detected center, a predetermined distance toward the punch so that the blister is accurately aligned with the punch.

In one embodiment the step of detecting the center can include calculating first and second slopes of respective first and second sides of the blister to generate a blister profile and detecting the midpoint of the blister profile which represents the center of the blister. The step of detecting the center can also include detecting the maximum height of the blister.

Finally, the invention features a system for aligning a blister strip blister with a punch including an energy source for directing a beam of energy toward a blister strip containing at least one blister, a drive assembly for moving the blister strip in alignment with the beam of energy such that the at least one blister passes through the beam of energy and a detector for receiving beams of reflected energy from the blister strip. There are means for detecting the center of the at least one blister from the reflected beams of energy. The drive assembly, in response to the detected center, moves the blister a predetermined distance, the distance from the sensor to a punch, toward the punch so that the blister is aligned with the punch.

In one embodiment the means for detecting can include means, responsive to the detector, for calculating first and second slopes of respective first and second sides of the blister and generating a blister profile and means, responsive to the means for calculating, for determining the midpoint of the blister profile which represents the center of the blister. The means for detecting the center can include means, responsive to the detector, for detecting the maximum height of the blister which represents the center of the blister.

It is therefore an object of the present invention to provide a system and method that accurately and efficiently weighs the amount of powder contained in a blister strip blister.

It is a further object of the present invention to provide such a system and method that detects defects in a blister strip blister.

It is still a further object of this invention to provide such a system and method that accurately aligns a blister with a punch to punch the blister without breaking the blister.

### Brief Description of the Drawings

Figure 1 is a detailed three dimensional view of the check-weighing system for accurately weighing the powder contained in the blisters of a blister strip according to the present invention;
Figure 2 is an enlarged three dimensional view of the sensor and the guide of the check-weighing system of Figure 1;
Figure 3 is an enlarged three dimensional view of the guide of Figure 2;
Figures 4A-4D are detailed three dimensional views demonstrating the detection of the peak of the blister according to one aspect of the present invention;
Figure 5 is a side elevational view of the punch and the drive assembly of the check-weighing system of Figure 1;
Figure 6 is an enlarged three dimensional view of the guide and the punch of the check-weighing system of Figure 1;
Figure 7 is an enlarged three dimensional view of the punch tip of figure 6 in which the tip is contoured to seat an individual blister;
Figure 8 is a three dimensional view, similar to Figure 1, of the check-weighing system according to the present invention including a hopper for deflecting and catching a punched blister strip; and
Figure 9 is a flow chart of the method of weighing a metered dose of medication within a blister strip blister according to the present invention.

### Detailed Description of the Invention

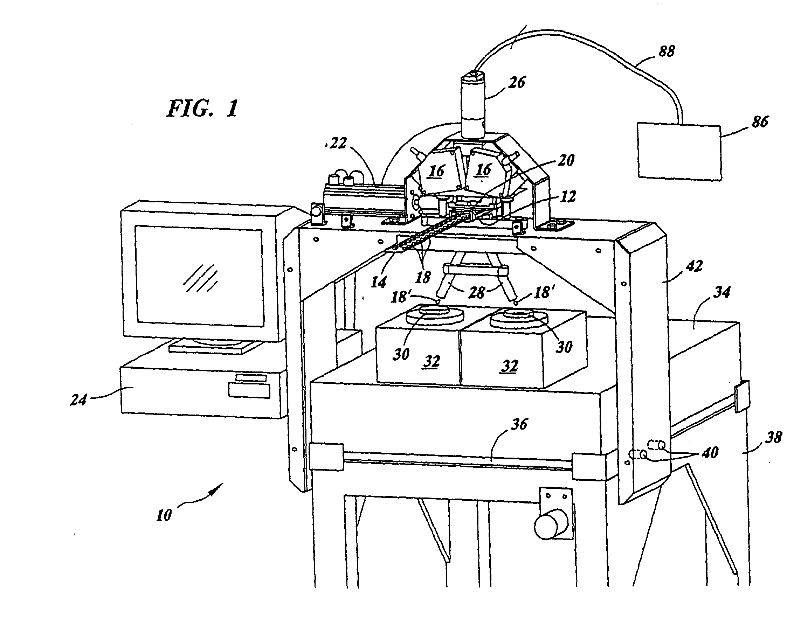

There is shown in Figure 1 a check-weighing system, generally designated 10, for check-weighing a metered dose of powder medication according one embodiment of the present invention. Check-weighing system 10 includes a guide 12 for receiving a blister strip 14 and a sensor **16** that detects the height of individual blisters **18** that comprise blister strip **14** and which are filled with a metered content, for example a metered dose of powdered medication.

Guide **12** is aligned with a punch generally designated **20.** A drive assembly **22** can be controlled by a computer controller 24, in response to sensor **16** to advance blister strip **14** through guide **12** toward punch **20**. An actuator **26** drives punch **20** to punch individual blisters **18** from blister strip **14.** Individual punched blisters **18'** fall through chutes **28** into respective pans **30,** for example disposable light-weight foil pans, that are placed on respective balances **32.** Balance **32** weighs the punched blisters **18'** to provide a punched blister weight.

Balance **32,** for example an SAG 245 available from Mettler Toledo, Inc. of Columbus, Ohio, is extremely sensitive and must therefore be permitted to settle before each punched blister weight can be measured. This can typically take up to four seconds. Individual punched blisters **18'** can be weighed one at a time to determine which, if any, are under weight or over weight for a particular powder dose. Although not a requirement of the present embodiment, balance **32** can be zeroed after each punch weight is measured so that the individual weight of a subsequent punched blister **18'** can be accurately measured. However, weighing each punched blister **18'** individually and zeroing balance **32** are not necessary limitations of the invention as all the individual blisters **18** can be punched from blister strip **14** before a punched weight is determined.

In any case, once the weight of punched blister **18'** is measured, computer controller **24,** which may include for example a processor such as, for example, a Pentium® type processor available from Intel Corporation of Santa Clara, California, subtracts a predetermined weight (representing the weight of the foil and paper that comprise the blister) from the punched weight to yield the actual weight of the metered dose contained within punched blister **18'.** The predetermined weight can be determined by first punching a blank from blister strip **14** before the first blister **18** is punched. While this is the most accurate way to determine the powder weight according to the present invention, since the blank is a true representation of the weight of the composite lid foil that comprise blister **18,** this is not necessary limitation of the invention as a predetermined weight representing an average composite lid foil weight can also be used.

System **10** according to the present invention can typically punch a blister strip containing 120 blisters (two rows of 60 blisters) in four minutes, based on a four second settling time for balance **32.** This speed compares favorably to over an hour with the method of the prior art as discussed in the Background Art above. Moreover, the present invention provides a much more accurate measurement and can determine whether individual blisters are under/over weight while the prior art method only measured the powder weight of an entire strip. The system of the present invention can further generate a blister strip profile identifying which blisters, if any, are under or over the required height.

As discussed above, the predetermined weight of the composite lid foil can be determined for each strip by punching a blank (not shown) from blister strip **14** before the powder filled blisters **18** are punched, e.g., punching the flat portion of strip **14** that is introduced first into guide **12** which does not contain blisters. In this way, variations in the thickness of the aluminum foil and paper that make up blister strip **14** need not be accounted for and no assumptions that can affect the weight of the metered dose of powder need be made. However, an average weight for a blank can be predetermined and used for all strips although the accuracy of the check-weighing can be affected.

Balance **32** rests on a balance surface **34,** for example a marble block, Part Number 2245A44, available from McMaster-Carr of Atlanta, Georgia, that is sufficiently heavy so that balance **32,** given its sensitivity, is not unduly affected from external environmental vibrations. To further isolate balance **32** from external vibrations a shock absorbing layer **36,** for example a neoprene rubber pad, Part Number 5996K24, also available from McMaster-Carr of Atlanta, Georgia, can be provided between balance surface **34** and frame **38.** To isolate balance **32** from vibrations from punch **20,** neoprene bushings **40** (shown in phantom) can be provided between frame **38** and legs **42**.

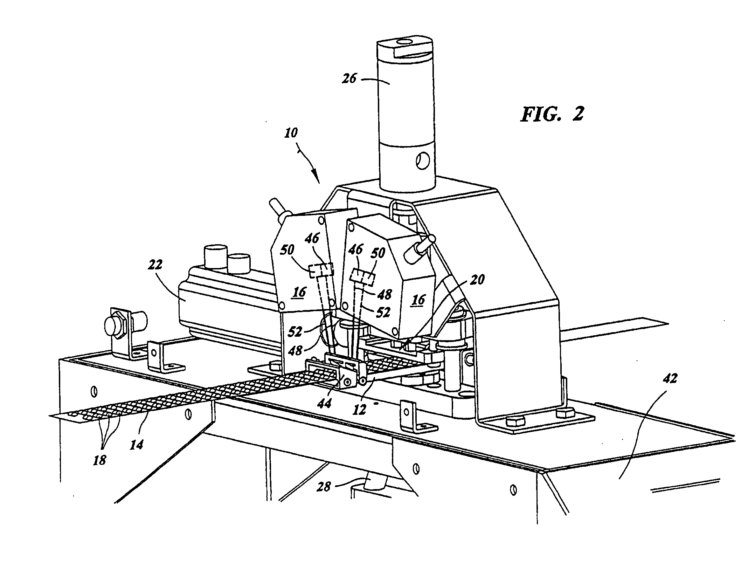

Guide **12,** as shown in Figure 2, includes an entry guide **44** for funnelling blister strip **14** into guide **12.** Sensor **16,** for example a Model LB-041 laser micrometer available from Keyence Corporation of Atlanta, Georgia, can be used to detect the height of blister **18.** Sensor **16** includes an energy source **46,** shown in phantom, for example a light source, that directs a beam of energy **48,** such as a laser beam, toward blister **18.** Sensor **16** also includes a detector **50,** shown in phantom, that receives a beam of reflected energy **52** from blister strip **14.** However, the sensor described above is not a necessary limitation of the invention as individual energy sources and detectors that include infrared sensors, sonic sensors as well as contact sensors readily apparent to those skilled in the art can also be used without departing from the scope of the present invention. Moreover, while beams **48** and **52** are represented in the drawings as two distinct beams, rather than co-linear beams, this is for illustrative purposes only. The proximity of source **46** and detector **50** will dictate the alignment of beams **48** and **52,** e.g. coplanar or non-coplanar.

Using laser micrometer **16,** the slopes of first and second sides, e.g., the front and back sides, of a blister are measured. Computer controller **24** uses the recorded heights to determine the slope of the front and back surfaces of blister **18.** The intercept of the respective slopes and base foil of blister strip **14** are calculated and a blister profile is generated. The blister profile represents a cross section of blister **18** having a blister width defined by the intercepts of the respective slopes with blister strip **14.** The midpoint of the blister profile is determined and represents the center of blister **18.** The center point is then used as the reference point for advancing blister **18** to punch **20,** accurately aligning blister **18** within punch **20,** such that the blister **18** is located under the punch. This eliminates problems due to asymmetrical blisters. Alternatively, the maximum height can be detected as the maximum height is where the slopes change from positive to negative and is typically the center of the blister.

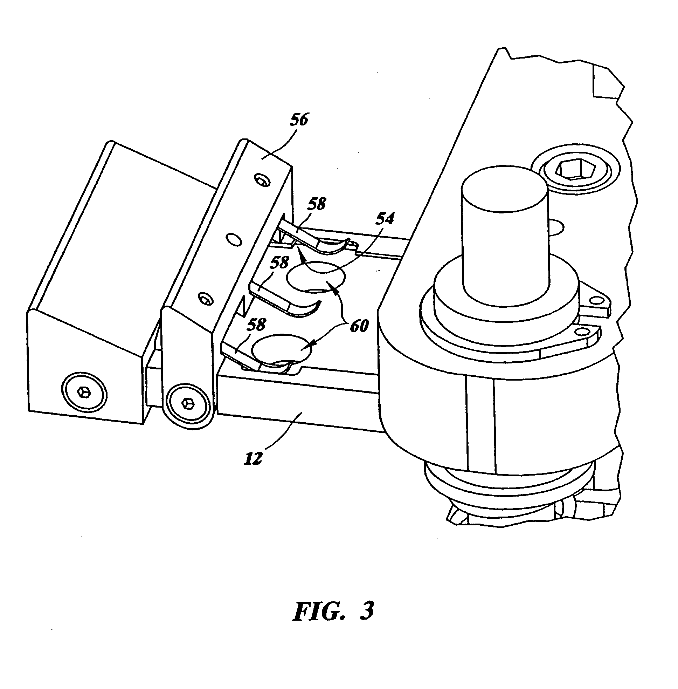

In order to ensure that the profile of blister **18** is accurately measured, guide **12** can include a channel **54,** as shown in Figure 3, for receiving the edges of blister strip **14** to maintain blister strip **14** flat within guide **12**. Guide **12** can further include a spring holder **56,** as shown in Figure 3, which includes springs **58** (such as, for example, leaf springs) for holding blister strip **14** flat within guide **12.** Individual blisters **18** pass between springs **58** so that blisters **18** will not strike springs and be deformed, which would prevent accurate profile determination. It will be readily apparent to those skilled in the art that as few or as many springs **58** should be used as are required to keep blister strip **14** flat within guide **12,** and thus depends on the number of rows of blisters **18** on blister strip **14**. Guide **12** can be provided with passageways or holes **60** through guide **12** so that energy beam **48,** such as a laser beam, will pass through guide **12** in the absence of blister strip **14.** Accordingly, computer controller **24** can be programmed so that drive assembly **22** remains idle until a beam of reflected energy **52** is detected. Moreover, computer controller **24** can further be programmed to stop system **10** when no more beams of reflected energy **52** are detected after the last blister **18** is punched.

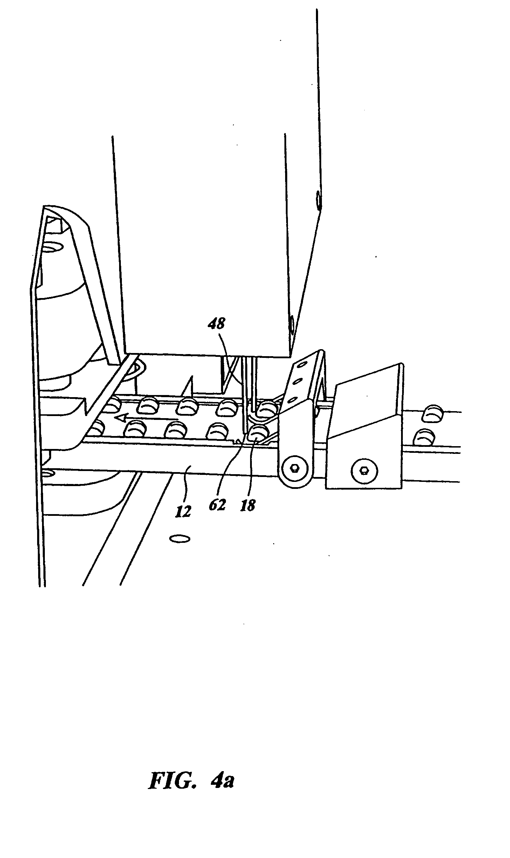

Referring now to Figure 4A, the height of blister **18** is detected by directing beam **48** toward blister strip **14.** As blister strip **14** is advanced through guide **12,** in the direction as indicated by the arrow, a beam of reflected energy **52** is reflected from blister **18** at a point or base **62** and the height at that point is detected. Because base **62** is not a portion of blister **18,** but is instead a flat portion of blister strip **14,** base **62** is a zero reference point.

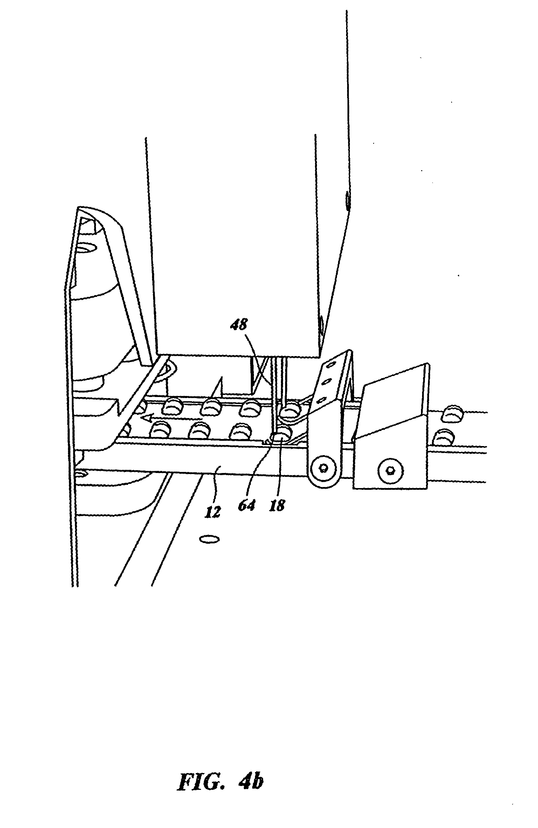

Blister **18** is aligned with and passes through beam **48**, as shown in Figure 4B, and beam **48** continuously strikes blister **18,** for example at a point **64.** Point **64** is higher than the previously detected height at base **62** indicating that a blister has been detected. The height of blister **18** is continuously measured as blister **18** passes through beam **48.** Computer controller **24** (Figure 1) determines from the reflected beam the instantaneous height detected from blister **18** and calculates a front slope.

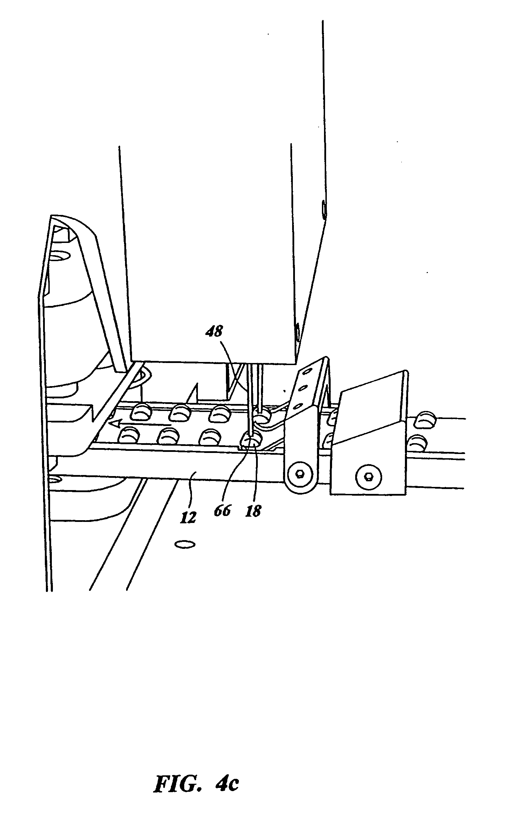

As shown in Figure 4C, beam **48** strikes blister **18** at a point **66** which is the apex or peak of blister **18**, that is, point **66** is thus higher that any previously measured point. However, thus far computer controller **24** is merely detecting the height of blister **18** continuously and has not yet determined that a peak has been detected.

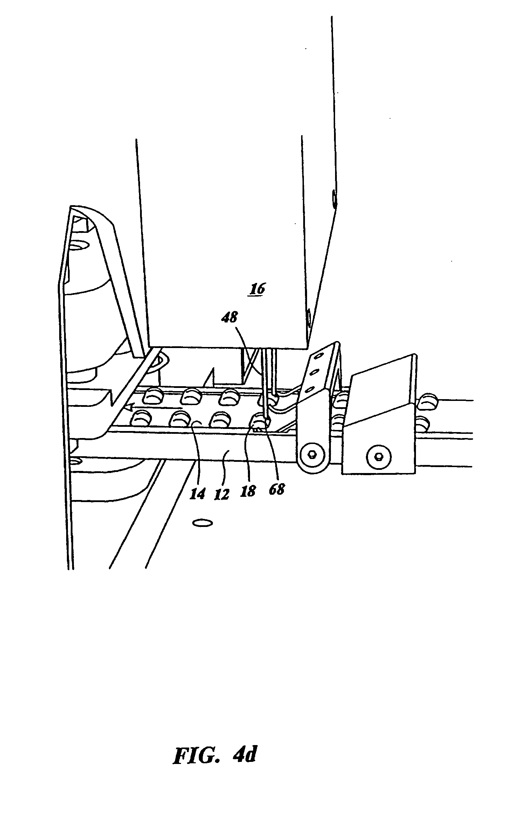

Next, as shown in Figure 4D, beam **48** strikes blister **18** at a point **68** that is lower than the previously measured point 66. Thus, computer controller **24** determines that the previous position of blister strip **14** within guide **12** corresponds to the maximum height of blister 18.

The maximum height typically corresponds to the center of blister **18.** Computer controller **24** continues to detect the instaneous height and calculates a back slope. Once the front and back slopes are detected, the points at which the respective slopes intersect with base **62** are determined and a blister profile is generated. Computer controller **24** then calculates the distance halfway between the front and back base/slope intersections which represents the actual center of the blister **18.**

The profile and height of blister **18** can serve two purposes. First, in terms of quality assurance, the profile and measured maximum height can be compared to a predetermined height in order to determine whether a defect exists in individual blister **18.** If blister **18** is not the correct height, blister **18** can affect the operation of the inhaler device for which blister strip **14** is intended. Also, a defective blister can prevent the proper dose of powdered medication from being contained within blister **18,** although dispensed properly, if the height of blister **18** is too small.

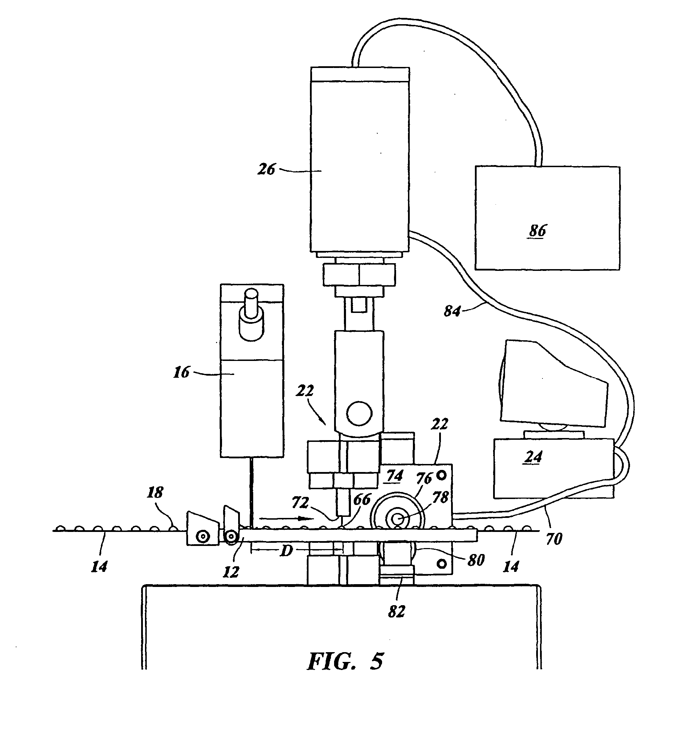

A second purpose for detecting either the profile or maximum height is to advance blister strip **14,** as shown in Figure 5, the proper distance to ensure that blister **18** aligned with punch **20** so that it is punched cleanly by punch **20** and is not broken. If blister **18** becomes broken when punched, powder can be lost, adversely affecting the accurate weighing of the powder medication. The distance **D** between sensor **16** and punch **20** does not change. Thus, when computer controller **24** detects the center of blister **18,** computer controller **24** signals drive assembly **22,** via bus **70,** to advance blister strip **14** through guide **12** such that blister **18** is centered with and in alignment with a punch tip **72.** Drive assembly **22** can include a motor **74** such as a stepper motor, for example a Model Number ST-0171EBA-E7LN-NNN available from American Precision Industries, Inc. of Amherst, New York, to precisely advance blister strip **14** such that peak **66** is aligned with punch tip **72.**

A drive wheel **76** is mounted on a motor shaft **78** of motor **74** to advance blister strip **14.** There can also be provided a friction wheel **80** that urges blister strip **14,** via spring **82,** into contact with drive wheel **76** to ensure proper engagement of drive wheel **76** and blister strip **14.** Spring **82** can include a number of different type of springs such as bent washer springs, coiled springs, leaf springs and the like, as will be readily apparent to those skilled in the art. Accordingly, blister strip **14** is sandwiched between drive wheel **76** and friction wheel **80** so that every rotation of motor **74** is translated into movement of blister **18** toward punch **20.** Proper translation of blister strip **14** ensures proper alignment of peak **66** with punch tip **72**. Once peak **66** of blister **18** is in alignment with punch tip **72**, computer controller **24** signals punch actuator **26** via bus **84** to drive punch **20** such that punch tip **72** punches blister **18** cleanly from blister strip **14** without breaking blister **18**.

Actuator **26** can be a fluid driven actuator such as a hydraulic or air cylinder. In one embodiment of the present invention actuator **26** includes a pneumatic air cylinder, Model Number M-120.5-LS available from Bimba Manufacturing Company, New Britain, CT. Air for operating actuator **26** is supplied by an air compressor **86** via hose **88.** Actuator **26** could also include a hydraulic actuator. However, a fluid driven actuator is not a necessary limitation to the invention as punch **20** can also be gear driven, for example by worm or tooth gears, or driven by a motor and fly wheel assembly, as will be readily apparent to those skilled in the art.

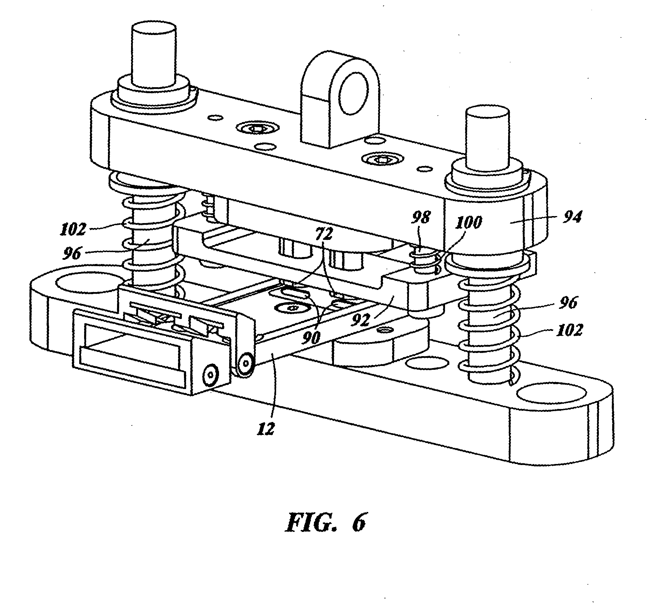

In order to ensure a clean punch, the tolerance between punch tip **72** and a die **90**, shown in Figure 6, must be tight. If blister **18** is not cleanly punched from blister strip **14**, blister **18** will essentially be torn from blister strip **14** which will vary the foil and paper weight from blister to blister and thus can adversely affect the weight determination of the powder within blister **18.**

To further assist in obtaining a clean punch, punch **20** can include a hold down clamp **92.** As actuator **26** drives punch top **94,** containing punch tip **72**, toward blister strip **14** along punch guide supports **96,** hold-down clamp **92,** for example a stripper plate, engages blister strip **14** within guide **12** to firmly hold blister strip **14** in place as punch tip **72** punches blister **18** from blister strip **14.** Hold-down clamp **92** slides on a pair of clamp guides **98** extending downwardly from punch top **94.** Springs **100** about clamp guides **98** urge hold down clamp **92** away from punch top **94** so that hold down clamp **92** engages blister strip **14** before punch tip **72.** Punch tip **72** can also be slightly angled, for example one half degree, so that tip **72** does not engage blister strip **14** all at once as is well known in the art.

Actuator **26,** such as the air cylinder described above, typically includes internal return springs, not shown, such that when power to system **10** is interrupted, for example in the event of an emergency, punch **20** will return to a neutral position. However, return springs **102** can also be provided to return punch **20** to a neutral position, i.e., in the retracted or up position.

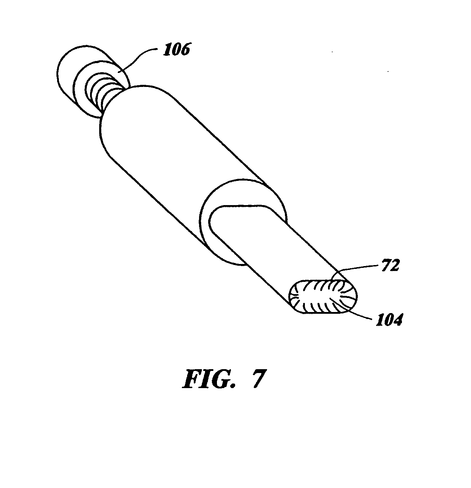

In order to assist in proper alignment of peak **66** of blister **18** with punch tip **72,** punch tip **72,** as shown in Figure 7, can include a contour **104**. For example, contour **104** can include a concave surface for receiving blister **18** to properly seat blister **18** within punch tip **72.** Moreover, by adjusting the point in time at which hold down clamp **92,** Figure 6, engages blister **18** and exerts pressure on blister strip **14,** contour **104** can properly seat a slightly misaligned blister **18** within punch tip **72** before blister strip **14** is firmly held within guide **12.** Punch tip **72** can be removably mounted within punch top **94,** for example with threaded bolt **106,** so that when punch tip **72** becomes dull it can easily be replaced. The ability to remove punch tip **72** from punch top **94** can also be useful to enable the selection of differently shaped punch tips **72** to accommodate differently profiled blisters **18.**

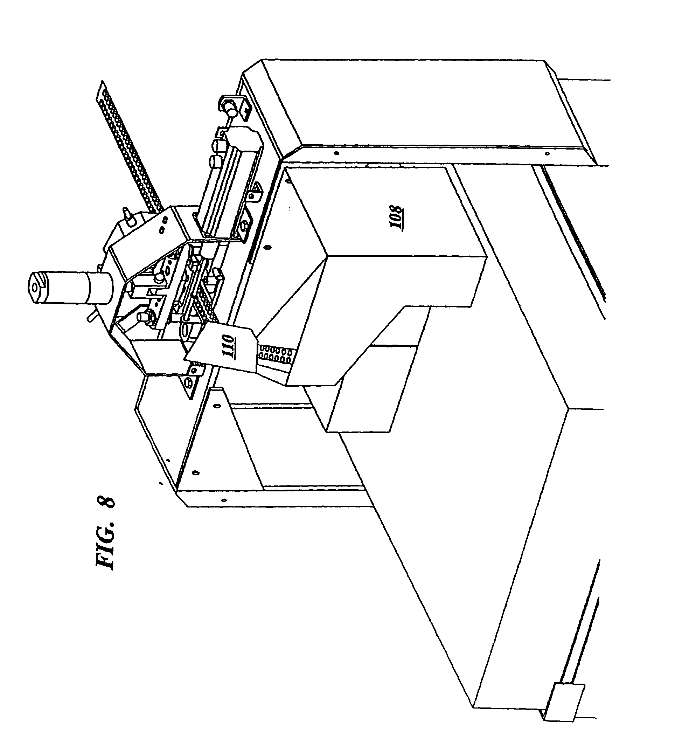

As shown in Figure 8, there is a hopper **108** for receiving punched blister strips **14'.** Deflector **110** directs punched blister strip **14'** into hopper **108** as motor **74** continues to advance blister strip **14** through guide **12.**

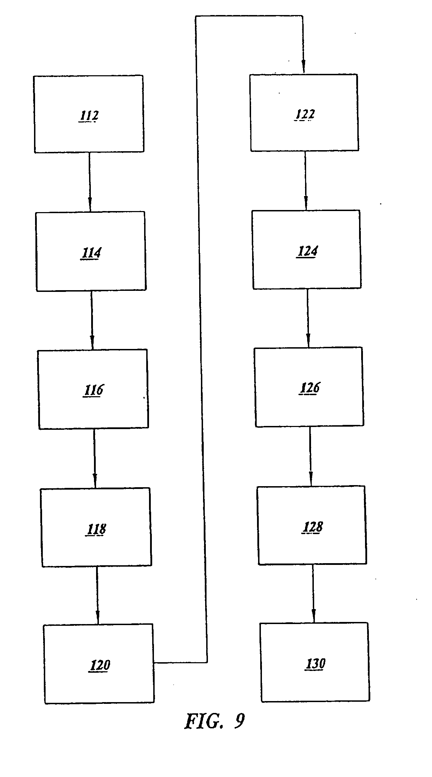

While computer controller **24** can precisely integrate sensor **16,** drive assembly **22,** actuator **26,** punch **20** and balance **32,** the novelty of the present invention is also realized in the method in which computer controller **24** check-weighs medical powder blister strip blisters. Referring now to Figure 9, there is represented the method in which computer controller **24** carries out the check-weighing procedure of the present invention.

As shown in Figure 9, a series of incremental heights over the profile of a blister **18** are measured by sensor **16** (Block **112**) by directing a beam of energy **48** at blister strip **14** and receiving reflected energy **52** as blister **18** passes through beam **48.** These measurements are used to define the profile of blister **18,** and can also be used to determine the maximum height of blister **18.**

The incremental heights are used to calculate the front and back slopes of blister **18,** and the point where the slopes intersect base **62** are determined. The midpoint between the respective intersections connotes the center of blister **18.** Alternatively, while less reliable, the maximum height of blister **18** can be detected and used to connote the center of blister **18.** The detected maximum height can also be compared to a predetermined height to detect defects in blister **18.** If the height is greater or less than the predetermined height, the blister is defective. Drive assembly **22** then moves blister strip **14** a predetermined distance toward punch **20** (Block **114**) based on the detected center of blister **18.** Where blister **18** is the first blister detected on blister strip **14,** drive assembly **22** stops blister strip **14** (Block **116)** and punches a blank from blister strip **14** (Block **118**). The blank is weighed by balance **32** (Block **120**) to get the predetermined weight representing the composite foil material containing blister **18.** Once the blank has been weighed, drive assembly **22** moves blister strip **14** toward punch **20**, aligning blister **18** with punch tip **72** (Block **122**). Blister **18** is punched from blister strip **14** (Block **124**) by punch tip **72** and balance **32** is allowed to settle (Block **126**). Once balance **32** has settled punched blister **18'** is weighed (Block **128**). After punched blister **18'** is weighed, the predetermined weight is subtracted from the punched blister weight (Block **130**) to yield an accurate measurement of the powder contained within blister **18.**

Thus, the method and system according to the present invention provide an effective way to very accurately check-weigh powdered medication blister strips without having to make assumptions or otherwise account for lost percentages of powder as in the prior art method. Also, individual blisters can be weighed to determine at what point in a processing run the dosage became inaccurate.

It will be understood that various details of the invention may be changed without departing from the scope of the invention. Furthermore, the foregoing description is for the purpose of illustration only, and not for the purpose of limitation--the invention being defined by the claims.

This application is divided from European (PCT) patent application No. 01914402.1 (publication No. WO01/60695), the entire original content of which is hereby incorporated herein by reference.

## Claims

1. A system for check-weighing the content of a blister strip blister comprising:
(a) a guide adapted to receive a blister strip comprised of at least one blister;
(b) a punch aligned with the guide for receiving the at least one blister;
(c) an actuator engaged with the punch for driving the punch toward the blister strip, whereby the blister is punched from the blister strip; and
(d) a balance adapted to receive the punched blister for weighing the punched blister and generating a punched blister weight for the at least one blister.

2. The check-weighing system of claim 1 further including a controller, responsive to the balance, for subtracting a predetermined weight from the punched blister weight.

3. The check-weighing system of claim 1 further including a drive assembly, responsive to the blister strip, for advancing the at least one blister toward the punch.

4. The check-weighing system of claim 3 in which the drive assembly includes a drive wheel adapted to engage a first side of the blister strip for advancing the at least one blister toward the punch.

5. The check-weighing system of claim 4 in which the drive assembly further includes a friction wheel adapted to engage a second side of the blister strip opposite the first side for urging the blister strip towards the friction wheel.

6. The check-weighing system of claim 5 in which the drive assembly further includes a motor, responsive to the controller, for engaging the drive wheel to advance the at least one blister a predetermined distance toward the punch.

7. The check-weighing system of claim 6 in which the controller includes a computer processor.

8. The check-weighing system of claim 6 in which the motor comprises a stepper motor for advancing the blister strip the predetermined distance.

9. The check-weighing system of claim 3 further including a sensor, aligned with the guide and responsive to the at least one blister, for detecting a center of the at least one blister.

10. The check-weighing system of claim 9 in which the sensor includes an energy source for directing a beam of energy toward the blister strip, the sensor receiving a beam of reflected energy from the blister strip.

11. The check-weighing system of claim 10 in which the energy source includes a light source.

12. The check-weighing system of claim 11 in which the light source includes a laser.

13. The check-weighing system of claim 9 in which the guide includes a spring for urging the blister strip toward the guide.

14. The check-weighing system of claim 10 in which the guide further includes a passageway adapted to receive the beam of energy for preventing a reflected beam in the absence of a blister strip.

15. The check-weighing system of claim 1 in which the punch includes a clamp, responsive to the actuator, for holding the blister strip within the guide as the blister is being punched form the blister strip.

16. The check-weighing system of claim 15 in which the punch includes a concave tip for seating the blister within the punch as the blister is being punched from the blister strip.

17. The check-weighing system of claim 16 in which the tip engages the blister strip at an oblique angle.

18. The check-weighing system of claim 1 in which the actuator comprises a fluid driven actuator.

19. The check-weighing system of claim 18 in which the fluid driven actuator comprises an air cylinder.

20. A system for check-weighing the content of a blister strip blister comprising:
(a) a guide adapted to receive a blister strip comprised of at least one blister;
(b) a punch aligned with the guide for receiving the at least one blister;
(c) an actuator engaged with the punch for driving the punch toward the blister strip, whereby the blister is punched from the blister strip;
(d) a balance adapted to receive the punched blister for weighing the punched blister and generating a punched blister weight for the at least one blister; and
(5) a drive assembly responsive to the blister strip for advancing the at least one blister toward the punch.

21. The check-weighing system of claim 20 further including a controller, responsive to the balance, for subtracting a predetermined weight from the punched blister weight.

22. The check-weighing system of claim 20 in which the drive assembly includes a drive wheel adapted to engage a first side of the blister strip for advancing the at least one blister toward the punch.

23. The check-weighing system of claim 22 in which the drive assembly further includes a friction wheel adapted to engage a second side of the blister strip opposite the first side for urging the blister strip towards the friction wheel.

24. The check-weighing system of claim 23 in which the drive assembly further includes a motor, responsive to the controller, for engaging the drive wheel to advance the at least one blister a predetermined distance toward the punch.

25. The check-weighing system of claim 24 in which the controller includes a computer processor.

26. The check-weighing system of claim 24 in which the motor comprises a stepper motor for advancing the blister strip the predetermined distance.

27. The check-weighing system of claim 20 further including a sensor, aligned with the guide and responsive to the at least one blister, for detecting a center of the at least one blister.

28. The check-weighing system of claim 27 in which the sensor includes an energy source for directing a beam of energy toward the blister strip, the sensor receiving a beam of reflected energy from the blister strip.

29. The check-weighing system of claim 28 in which the energy source includes a light source.

30. The check-weighing system of claim 29 in which the light source includes a laser.

31. The check-weighing system of claim 20 in which the guide includes a spring for urging the blister strip toward the guide.

32. The check-weighing system of claim 28 in which the guide further includes a passageway adapted to receive the beam of energy for preventing a reflected beam in the absence of a blister strip.

33. The check-weighing system of claim 20 in which the punch includes a clamp, responsive to the actuator, for holding the blister strip within the guide as the blister is being punched form the blister strip.

34. The check-weighing system of claim 33 in which the punch includes a concave tip for seating the blister within the punch as the blister is being punched from the blister strip.

35. The check-weighing system of claim 34 in which the tip engages the blister strip at an oblique angle.

36. The check-weighing system of claim 20 in which the actuator comprises a fluid driven actuator.

37. The check-weighing system of claim 36 in which the fluid driven actuator comprises an air cylinder.

38. A method for weighing the content of a blister in a blister strip, the method comprising the steps of:
(a) punching a blister containing a metered content from a blister strip;
(b) weighing the punched blister to determine a punched blister weight; and
(c) subtracting from the punched blister weight a predetermined weight representing the weight of an empty blister to determine a weight representative of the metered content.

39. The method of claim 38 in which the step of punching includes punching the blister from the blister strip without breaking the blister.

40. The method of claim 38 further including the steps of punching a blank from the blister strip and weighing the blank to produce the predetermined weight.

41. The method of claim 38 further including the step of determining the profile of the blister prior to punching the blister.

42. The method of claim 41 further comprising the step of detecting the center of the blister to facilitate alignment of the blister for punching.

43. The method of claim 42 in which the step of detecting the center includes calculating a first slope of a first blister side and a second slope of a second blister side to generate a blister profile.

44. The method of claim 43 in which the step of detecting the center further includes detecting the midpoint of the blister profile.

45. A method for weighing the content of a blister in a blister strip, the method comprising the steps of:
(a) punching a blister containing a metered content from a blister strip without breaking the blister;
(b) weighing the punched blister to determine a punched blister weight; and
(c) subtracting from the punched blister weight a predetermined weight representing the weight of an empty blister to determine a weight representative of the metered content.

46. The method of claim 45 further including the steps of punching a blank from the blister strip and weighing the blank to produce the predetermined weight.

47. The method of claim 45 further including the step of measuring a series of incremental heights of a profile of the blister prior to punching the blister to define the profile of the blister.

48. The method of claim 47 further comprising the step of calculating the center of the blister to facilitate alignment of the blister for punching.

49. The method of claim 48 in which the step of detecting the center includes calculating a first slope of a first blister side of the profile and a second slope of a second blister side of the profile.

50. The method of claim 49 in which the step of detecting the center further includes detecting the midpoint of the blister profile.

51. A method for detecting defects in a blister of a blister strip, the method comprising the steps of:
(a) directing, from an energy source, a beam of energy toward a blister strip containing at least one blister;
(b) moving the blister strip in alignment with the beam of energy such that the at least one blister passes through the beam of energy;
(c) receiving reflected beams of energy from the blister strip;
(d) determining from the reflected beams of energy the maximum height of the at least one blister; and
(e) comparing the maximum height to a predetermined height.

52. A method for aligning a blister of a blister strip with a punch, the method comprising the steps of:
(a) directing, from an energy source, a beam of energy toward a blister strip containing at least one blister,
(b) moving the blister strip in alignment with the beam of energy such that the at least one blister passes through the beam of energy;
(c) receiving reflected beams of energy from the blister strip;
(d) detecting from the reflected beams of energy the center of the at least one blister; and
(e) moving the blister, in response to the detected center, a predetermined distance toward a punch whereby the blister is aligned with the punch.

53. The method of aligning a blister of claim 52 in which the step of detecting the center includes calculating a first slope of a first side of the blister and a second slope of a second side of the blister to generate a blister profile.

54. The method of claim 53 in which the step of detecting the center further includes detecting the midpoint of the blister profile.

55. The method of claim 52 in which the step of detecting the center includes detecting the maximum height of the blister.

56. A system for aligning a blister of a blister strip with a punch comprising:
(a) an energy source for directing a beam of energy toward a blister strip containing at least one blister;
(b) a drive assembly for moving the blister strip in alignment with the beam of energy such that the at least one blister passes through the beam of energy;
(c) a detector for receiving reflected beams of energy from the blister strip; and (d) means for detecting from the reflected beams of energy the center of the at least one blister wherein the drive assembly, in response to the detected center, moves the blister a predetermined distance toward a punch whereby the blister is aligned with the punch.

57. The system of claim 56 in which the means for detecting the center includes means, responsive to the detector, for calculating a first slope of a first side of the blister and a second slope of a second side of the blister to generate a blister profile.

58. The system of claim 57 in which the means for detecting the center further includes means, responsive to the means for calculating, for determining the midpoint of the blister profile.

59. The system of claim 56 in which the means for detecting the center includes means, responsive to the detector for detecting the maximum height of the blister.
